# FASCICULE DE BREVET EUROPEEN

(11) **EP 0 388 846 B1**
(45) Date de publication et mention de la délivrance du brevet: **18.01.1995**
(21) Numéro de dépôt: 90105127.6
(22) Date de dépôt: 19.03.1990
(51) Int. Cl.: H04B 10/14

(54) **Dispositif d'alimentation et de commande de laser pour liaison par fibre optique entre un abonné et un central de télécommunications**
Laserspeisungs- und Steuereinrichtung für Lichtwellenleiterverbindung zwischen einem Teilnehmer und einer Fernmeldevermittlungsanlage
Laser feeding and controlling apparatus for an optical fibre link between a subscriber and a telecommunication exchange

(30) Priorité: 22.03.1989 FR 8903758
(43) Date de publication de la demande: 26.09.1990
(73) Titulaire: ALCATEL CIT, 75008 Paris (FR)
(72) Inventeur: Albouy, Pierre, F-22300 Lannion (FR); Chartie, Gérard, F-22560 Trebeurden (FR)
(74) Mandataire: Weinmiller, Jürgen

(56) Documents cités:
- DE-A- 2 902 789
- DE-A- 3 508 034
- US-A- 4 477 895
- ECOC 83 - 9TH EUROPEAN CONFERENCE ON OPTICAL COMMUNICATIONS, Genève, 23-26 octobre 1983, pages 267-270, Elsevier Science Publishers B.V. (North-Holland), Amsterdam, NL; T. HAMANAKA et al.: "560 Mb/s single-mode fiber transmission experiment"

## Description

L'invention concerne l'alimentation et la commande d'un laser pour liaison par fibre optique entre un abonné et un central de télécommunications, les données à transmettre ayant un débit élevé, plusieurs dizaines ou même centaines de Mbit/s, et venant moduler le courant d'alimentation d'une diode laser dont le faisceau lumineux qu'elle émet est transmis par fibre optique. Dans tout ce qui suit la diode laser sera appelée laser.

11 existe des dispositifs d'alimentation de laser, réalisés soit avec des elements discrets, soit en circuit intégré.

Les dispositifs à éléments discrets présentent les inconvénients suivants :
- faible precision due aux fortes variations des elements discrets avec la température, ces variations étant difficiles à compenser,
- encombrement plus important sur les circuits imprimés sur lesquels ils sont montés,
- coût plus important des réalisations en grande série,
- problèmes de réalisation : en effet les débits élevés exigent des vitesses qui demandent des connexions courtes, donc l'utilisation de composants hybrides, ce qui entraîne un coût plus élevé.

Les dispositifs à circuits intégrés déjà existants, telle que celui décrit dans la demande de brevet DE - A - 3 508 034, comme d'ailleurs les dispositifs à éléments discrets, ne permettent pas : d'une part d'ajuster et de couper le courant d'alimentation du laser lorsqu'il n'y a pas de données à transmettre, afin d'en augmenter la durée de vie; et d'autre part d'avoir deux sources de données modulantes commutables. En télécommunication, une liaison par fibre optique est reliée à chaque extrémité à un module d'extrémité comportant un circuit de reception et un circuit d'émission relies chacun à une fibre optique si la liaison comporte une fibre émission et une fibre réception, ou à une seule fibre optique si la liaison ne comporte qu'une fibre pour les deux sens de transmission. Pour procéder, à partir du central de telecommunication à des tests de la liaison reliant un central à un module d'extrémité, un dispositif d'essais situé au central émet des signaux de test à destination du module d'extrémité et doit recevoir en retour les signaux émis pour contrôle, ce qui nécessite, dans le module d'extrémité, un rebouclage du circuit de réception sur le circuit d'émission. Le dispositif d'alimentation de laser fait partie du circuit d'émission et doit donc, dans ce cas, recevoir du circuit de reception les signaux de test pour les réémettre, le circuit de réception constituant alors une source de données. Par ailleurs, en fonctionnement normal le dispositif d'alimentation reçoit directement, d'une source directe reliée au module d'extrémité, des données à émettre. Le dispositif d'alimentation de laser doit donc pouvoir être relié à l'une ou à l'autre de ces deux sources. D'autre part le rebouclage peut également être utilise lorsqu'un abonné reçoit des données de toute nature, video, téléphone, données informatiques, - etc, afin de permettre un contrôle par l'abonné, ou la station, qui a émis ces données.

L'invention a pour but de pallier les inconvénients des dispositifs existants, de disposer de deux sources de données commutables, et de permettre d'ajuster et de couper le courant d'alimentation du laser.

L'invention a pour objet un dispositif d'alimentation et de commande de laser pour liaison par fibre optique entre un abonné et un central de télécommunication; comportant :
- une première borne d'entrée pour recevoir un signal de réglage dudit courant;
- un générateur de courant ayant une première entrée de commande reliée à la première borne d'entrée;
- un modulateur de sortie, ayant une entrée de commande pour moduler le courant fourni par le générateur de courant;
- une deuxième borne d'entrée pour recevoir un premier signal de données,couplée à l'entrée de commande du modulateur de sortie;
- une borne de sortie pour fournir à un laser un courant module fourni par le modulateur de sortie;
   caractérisé en ce qu'il comporte en outre :
- une troisième borne d'entrée pour recevoir un second signal de données;
- une quatrième borne d'entrée pour recevoir un signal de sélection;
- un circuit de sélection couplé à la deuxième, troisième, et quatrième borne d'entrée du dispositif d'alimentation, et à l'entrée de commande du modulateur de sortie, pour sélectionner l'un des deux signaux de données et l'appliquer à l'entrée de commande du modulateur;
- une cinquième borne d'entrée pour recevoir un signal d'activation/désactivation, couplée à une seconde entrée de commande du générateur de courant, pour couper le courant d'alimentation du laser dans son état non actif.

L'invention va être décrite à l'aide d'exemples de réalisaitons illustrés par les figures annexées dans lesquelles :
- la figure 1 représente schématiquement un dispositif d'alimentation et de commande de l'invention,
- la figure 2 représente le circuit de réglage du générateur de courant de la figure 1,
- la figure 3 représente l'interface de commande du circuit de sélection de la figure 1,
- la figure 4 représente le modulateur de sortie de la figure 1,
- la figure 5 représente le circuit de sortie du circuit de recopie des données à émettre de la figure 1.

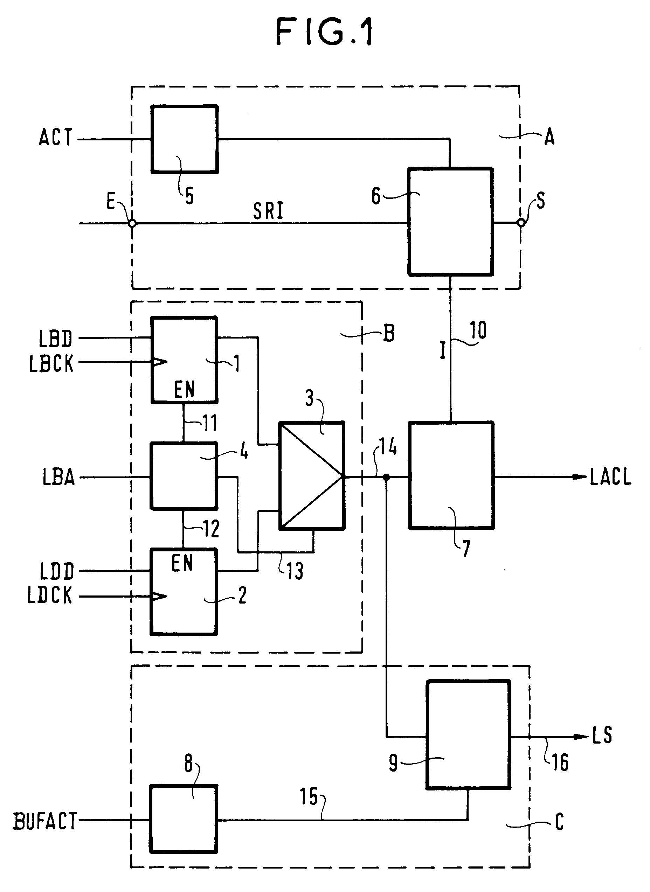

Le dispositif d'alimentation et de commande de l'invention est représenté schématiquement figure 1 ; il comprend un générateur de courant A, un circuit de sélection B, un modulateur de sortie 7, et circuit de recopie des données à émettre C, ce dernier circuit étant facultatif. Un tel dispositif d'alimentation équipe chaque extrémité d'une liaison par fibre optique ; il y a donc un dispositif chez l'abonné et un dispositif dans le joncteur d'abonné, au central.

Le générateur de courant A comporte un circuit de réglage du courant 6 et un translateur de niveau 5 pour activation et désactivation du laser, afin de couper le courant d'alimentation du laser lorsque la liaison abonné central de télécommunications n'est pas active, et augmenter ainsi la durée de vie du laser. Le translateur de niveau 5 reçoit en entrée un signal d'activation ACT et est relié au circuit de réglage du courant 6 qui est également relié à une borne d'entrée E et en reçoit un signal SRI de réglage du courant ; le circuit de réglage du courant 6 est relié au modulateur de sortie 7 par un fil 10 parcouru par un courant I, et à une sortie reliée à une borne de sortie de mesure S.

Le circuit de sélection 8 comporte deux bascules 1 et 2, de type D, un multiplexeur 3 et une interface de commande 4. Chaque bascule est reliée en sortie au multiplexeur 3 ayant une entrée de commande reliée en sortie de l'interface de commande 4 par une liaison 13. La bascule 1 reçoit des données LBD d'une première source de données et son entrée horloge reçoit un signal d'horloge LBCK associé aux données LBD de la première source ; la bascule 2 reçoit des données LDD d'une deuxième source de données et son entrée horloge reçoit un signal d'horloge LDCK associé aux données LDD de la deuxième source. Chaque bascule a une entrée de validation EN reliée par un fil 11, 12, en sortie de l'interface de commande 4 qui reçoit un signal de sélection LBA permettant une sélection entre les données LBD et LDD des deux sources de données. En fonction du signal de sélection LBA l'interface de commande 4 valide l'une des bascules 1 ou 2 et commande le multiplexeur 3, pour prendre en compte les données sortant de la bascule ainsi validée.

Le modulateur de sortie 7 est relié en sortie du multiplexeur 3 par une liaison 14, et délivre un signal d'alimentation de laser LACL. Le circuit de recopie des données à émettre C comprend un translateur de niveau 8 recevant un signal d'activation BUFACT et un circuit de sortie 9 ayant une entrée reliée par la liaison 14 en sortie du multiplexeur 3, et une entrée d'activation reliée en sortie du translateur de niveau 8, ledit circuit de sortie délivrant sur une liaison 16 un signal de sortie LS qui est la recopie des données à émettre délivrées par le multiplexeur. Les données ainsi recopiées sont émises à un niveau logique pour utilisation ultérieure, par exemple par un circuit de test ;le signal d'activation BUFACT permet d'activer ou de désactiver le circuit de sortie 9 auquel il est relié par un fil 15.

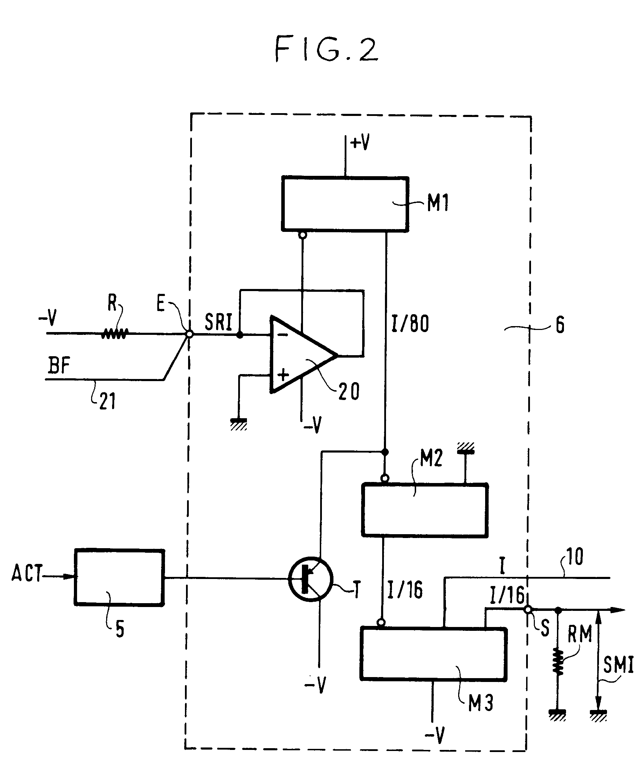

La figure 2 représente le circuit de réglage du courant 6 du générateur de courant A. Le circuit de réglage du courant comporte trois miroirs de courant M1, M2, M3, en cascade, un amplificateur opérationnel 20 et un transistor T.

Dans le circuit de réglage du courant 6, l'amplificateur 20 a une entrée négative reliée à la borne d'entrée E, une entrée positive reliée à la masse et une sortie reliée à l'entrée négative ; l'amplificateur a une borne d'alimentation reliée à un potentiel négatif -V et une autre borne d'alimentation reliée à une entrée du miroir de courant M1. Le miroir de courant M1 est relié d'une part à un potentiel positif +V et d'autre part à une entrée du miroir de courant M2. La borne d'entrée E est reliée au potentiel négatif -V par l'intermédiaire d'une résistance R extérieure au circuit de réglage du courant, ladite résistance permettant de régler le courant de laser, l'entrée négative de l'amplificateur 20 recevant un courant continu.

La borne d'entrée E est également reliée à un fil 21 qui achemine un signal alternatif BF ; ce signal alternatif est émis par un abonné appelant et il est détecté chez l'abonné appelé. Ce signal alternatif émis par un abonné appelant avant émission de données sert à activer les circuits chez l'abonné appelé. Le courant alternatif dû au signal alternatif BF est superposé au courant continu qu'il module ; le signal de réglage du courant SRI appliqué à l'entrée négative de l'amplificateur 20 est donc soit un courant continu lors de l'émission de données délivrées par le circuit de sélection B, soit un courant continu modulé par le signal alternatif BF avant émission des données. Le miroir de courant M1 délivre un courant I/80 au miroir de courant M2, I étant le courant d'alimentation du laser. La base d'un transistor de dérivation T est reliée en sortie du translateur de niveau 5 qui reçoit le signal d'activation ACT ; l'émetteur du transistor est relié à l'entrée du miroir de courant M2 et le collecteur est relié au potentiel négatif -V. Le rôle de ce transistor T est de dériver le courant I/80 délivré par le miroir de courant M1 en l'absence du signal d'activation ACT, c'est-à-dire lorsque le laser ne doit pas être alimenté. Le miroir de courant M2 a une sortie reliée à la masse ; il est également relié à une entrée du miroir de courant M3 auquel il délivre un courant I/16. Le miroir de courant M3 est relié au potentiel négatif -V ; et au modulateur de sortie 7 par le fil 10 parcouru par un courant continu I ; le miroir de courant M3 a une sortie reliée à la masse par une résistance de mesure RM, de valeur 160 ohms par exemple, extérieure au circuit de réglage, et parcourue par un courant I/16, de sorte que le signal de mesure SMI est la tension aux bornes de la résistance de mesure RM, cette tension étant égale à 160. I/16 = 10 I volts ; il est donc facile de régler le courant laser à partir de la lecture de cette tension qui donne la valeur du courant au coefficient 10 près.

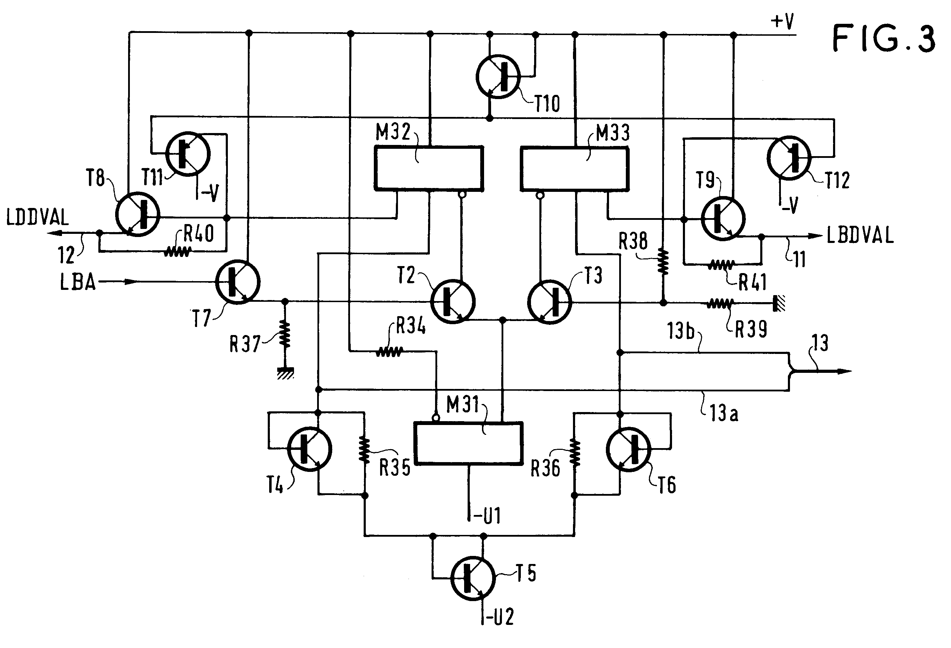

La figure 3 représente schématiquement l'interface de commande 4 du circuit de sélection B de la figure 1.

Un miroir de courant M31, relié à une première tension négative -U1, et à la tension positive +V, est relié par un circuit différentiel constitué par deux transistors T2 et T3 à deux miroirs de courant M32 et M33, le transistor T2 étant relié au miroir de courant M32 et le transistor T3 étant relié au miroir de courant M33. Chacun des miroirs de courant M32, M33 est relié à la tension positive +V. Un transistor T7 reçoit sur sa base le signal de sélection LBA et a son collecteur relié à la tension positive +V et son émetteur relié d'une part à la base du transistor T2 et d'autre part à la masse par une résistance R37 ; le transistor T3 a sa base reliée d'une part à la tension positive +V par une résistance R38 et d'autre part à la masse par une résistance R39. Le transistor T7, piloté par le signal de sélection LBA, commande le circuit différentiel constitué par les transistors T2 et T3, pour aiguiller vers l'un ou l'autre des miroirs de courant M32, M33, le courant délivré par le miroir de courant M31. Chaque miroir de courant M32, M33 a une première sortie reliée directement au multiplexeur 3 de la figure 1, par un fil, 13a, 13b, respectivement, ces fils constituant la liaison 13 figure 1 ; le multiplexeur 3 étant de type différentiel possède deux entrées de commande reliées chacune à un fil, 13a, 13b. La première sortie du miroir de courant M32 est également reliée par un transistor T4 à un transistor T5 lui même relié par son émetteur à une deuxième tension négative -U2 ; la première sortie du miroir de courant M33 est également reliée par un transistor T6 au transistor T5 ; les transistors T4, T5 et T6 ont chacun leur base reliée à leur collecteur, et les transistors T4 et T6 ont chacun leur collecteur relié à leur émetteur par une résistance R35, R36 respectivement. Les transistors T5 et T4 ou T6 servent à polariser les fils 13a et 13b qui acheminent des signaux de commande au multiplexeur 3.

Chaque miroir de courant M32 et M33 a une deuxième sortie reliée à la base d'un transistor, T8, T9, respectivement, dont le collecteur est relié à la tension positive +V ; l'émetteur du transistor T8 est relié par le fil 12 à l'entrée de validation EN de la bascule 2 à laquelle il délivre un signal de validation LDDVAL, et l'émetteur du transistor T9 est relié par le fil 11 à l'entrée de validation EN de la bacule 1 à laquelle il délivre un signal de validation LBDVAL.

L'émetteur et la base des transistors T8 et T9 sont reliés par une résistance R40, R41, respectivement.

La deuxième sortie du miroir de courant M32 est également reliée par un transistor T11 à un transistor T10 lui même relié à la tension positive +V ; la deuxième sortie du miroir de courant M33 est également reliée par un transistor T12 au transistor T10 ; les transistors T11 et T12 ont leur collecteur relié à un potentiel négatif -V, et le transistor T10 a son collecteur et sa base reliés au potentiel positif +V. Les deuxièmes sorties des miroirs de courant M32 et M33 valident les bascules 1 ou 2, une seule à la fois, par l'intermédiaire des transistors T8 et T9, selon que le courant délivré par le miroir de courant M31 est aiguillé vers le miroir de courant M32 ou M33 ; les transistors T11 et T10, ou T12 et T10, selon le cas, constituant un dispositif d'autosaturation limitant l'amplitude du signal de validation délivré par le transistor T8, ou T9.

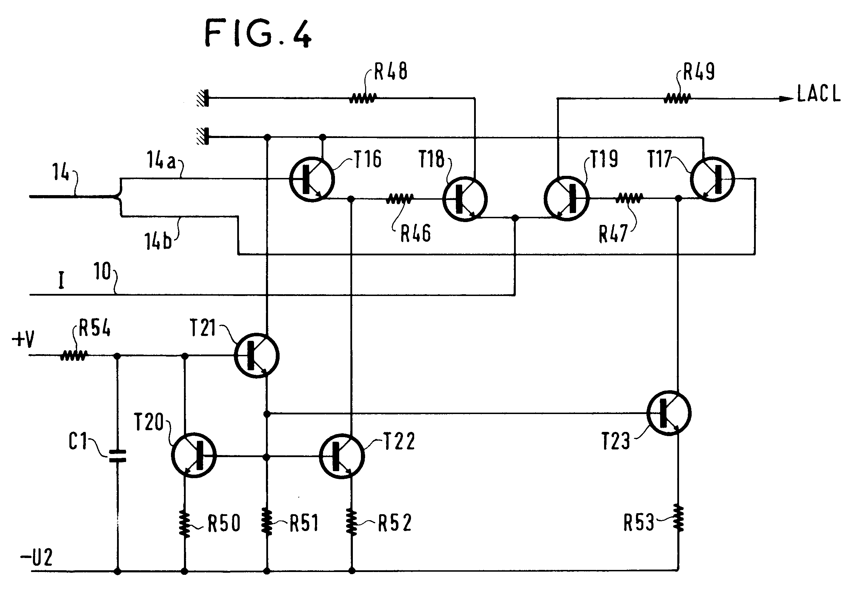

La figure 4 représente le modulateur de sortie 7 de la figure 1. Le modulateur de sortie comprend huit transistors T16 à T23. Les transistors T16 et T17 ont chacun leur base relié à un fil 14a, 14b, respectivement, ces deux fils constituant la liaison 14 reliant la sortie différentielle du multiplexeur 3 au modulateur de sortie, figure 1. Le transistor T16 a son collecteur relié à la masse et son émetteur relié par une résistance R46 à la base d'un transistor T18 dont le collecteur est relié à la masse par une résistance R48. Le transistor T17 a son collecteur relié à la masse et son émetteur relié par une résistance R47 à la base d'un transistor T19 dont le collecteur est relié à une résistance R49 et délivre le signal d'alimentation de laser LACL. Les transistors T18 et T19 ont leurs émetteurs reliés au fil 10 reliant le modulateur de sortie 7 au circuit de réglage du courant 6, le fil 10 étant parcouru par le courant de laser I. L'émetteur du transistor T16 est également relié au collecteur d'un transistor T22 dont l'émetteur est relié à la deuxième tension négative -U2 par une résistance R52. L'émetteur du transistor T17 est également relié au collecteur d'un transistor T23 dont l'émetteur est relié à la deuxième tension négative -U2 par une résistance R53. Un transistor T21 a son collecteur relié à la masse, et son émetteur relié à la deuxième tension négative -U2 par une résistance R51, à la base des transistors T22 et T23, et à la base d'un transistor T20 dont l'émetteur est relié à la deuxième tension négative -U2 par une résistance R50. La base du transistor T21 et le collecteur du transistor T20 sont reliés d'une part au potentiel positif +V par une résistance R54, et d'autre part à la deuxième tension négative -U2 par un condensateur C1. Les données à émettre, délivrées par le multiplexeur 3 et acheminées par la liaison 14, modulent le courant de laser I en tout ou rien par l'intermédiaire des transistors T16, T17, T18 et T19. Les transistors T22 et T23, en série avec les transistors T16 et T17, respectivement, sont polarisés de manière fixe par le transistor T21, le transistor T20 ayant pour rôle de stabiliser la tension sur la base du transistor T21 en cas de variation du potentiel positif +V ; le condensateur C1 sert à filtrer les variations très brèves (perturbations parasites) du potentiel positif +V ; chaque transistor T22, T23, avec sa résistance associée, R52, R53, constitue une source de courant constant.

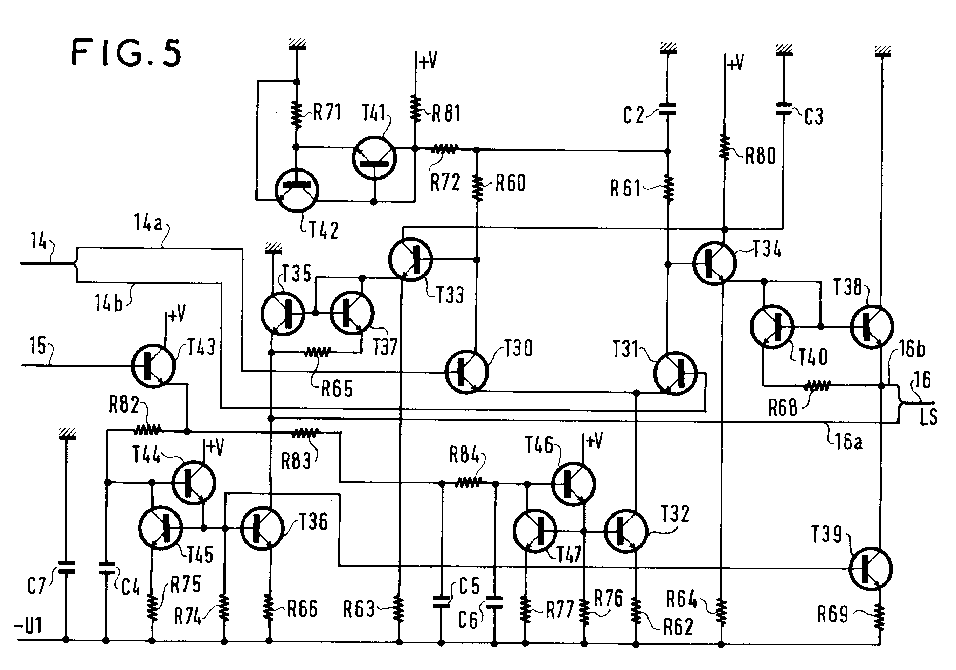

La figure 5 représente le circuit de sortie 9 du circuit de recopie des données à émettre C de la figure 1.

Deux transistors T30 et T31 d'un étage différentiel ont leurs bases reliées à un fil 14a, 14b, respectivement, ces deux fils constituant la liaison 14 reliant le circuit de sortie 9 à la sortie différentielle du multiplexeur 3. Chaque transistor T30, T31 a son collecteur relié par une résistance, R60, R61, respectivement, à un condensateur C2 lui même relié à la masse. Les émetteurs des transistors T30 et T31 sont reliés au collecteur d'un transistor T32 dont l'émetteur est relié par une résistance R62 à la première tension négative -U1. Un transistor T33 a sa base reliée au collecteur du transistor T30 et son émetteur relié par une résistance R63 à la première tension négative -U1. Un transistor T34 a sa base reliée au collecteur du transistor T31 et son émetteur relié par une résistance R64 à la première tension négative -U1.

Les transistors T33 et T34 ont leurs collecteurs reliés entre eux et reliés à la masse par un condensateur C3, et au potentiel positif +V par une résistance R80. Un transistor T35 a son collecteur relié à la masse et son émetteur relié d'une part au collecteur d'un transistor T36 dont l'émetteur est relié par une résistance R66 à la première tension négative -U1, et d'autre part à l'émetteur d'un transistor T37 par une résistance R65 ; le transistor T37 a son collecteur relié à l'émetteur du transistor T33 et sa base reliée d'une part à son collecteur et d'autre part à la base du transistor T35. Un transistor T38 a son collecteur relié à la masse et son émetteur relié d'une part au collecteur d'un transistor T39 dont l'émetteur est relié par une résistance R69 à la première tension négative -U1, et d'autre part à l'émetteur d'un transistor T40 par une résistance R68 ; le transistor T40 a son collecteur relié à l'émetteur du transistor T34 et sa base reliée d'une part à son collecteur et d'autre part à la base du transistor T38.

L'émetteur du transistor T35 est relié à un fil 16a, et l'émetteur du transistor T38 est relié à un fil 16b, ces deux fils 16a et 16b constituant la liaison 16, figure 1, par laquelle le circuit de sortie 9 délivre les signaux de sortie LS qui sont la recopie des signaux de données délivrés par le multiplexeur 3 sur la liaison 14.

Un transistor T41 a sa base reliée à son collecteur, au collecteur d'un transistor T42, au potentiel positif +V par une résistance R81, et à un point commun au condensateur C2 et aux résistances R60 et R61 par une résistance R72 ; l'émetteur du transistor T41 est relié à la base du transistor T42, et à la masse par une résistance R71 ; l'émetteur du transistor T42 est relié à la masse.

Un transistor T43 a son collecteur relié au potentiel positif +V, sa base reliée à la liaison 15 par laquelle elle reçoit un signal d'activation du translateur 8, et son émetteur relié d'une part à la base d'un transistor T44 par une résistance R82, et d'autre part à la base d'un transistor T46 par deux résistances R83 et R84 en série. Le transistor T44 a son collecteur relié au potentiel positif +V, et sa base est également reliée d'une part à la première tension négative -U1 par un condensateur C4 et d'autre part au collecteur d'un transistor T45 dont l'émetteur est relié par une résistance R75 à la première tension négative -U1 ; l'émetteur du transistor T44 est relié à la première tension négative -U1 par une résistance R74, et à la base de chacun des transistors T45, T36 et T39. Un point commun aux résistances R83 et R84 est relié par un condensateur C5 à la première tension négative -U1. Le transistor T46 a son collecteur relié au potentiel positif +V et sa base est également reliée d'une part à la première tension négative -U1 par un condensateur C6 et d'autre part au collecteur d'un transistor T47 dont l'émetteur est relié par une résistance R77 à la première tension négative -U1 ; l'émetteur du transistor T46 est relié à la base de chacun des transistors T47 et T32, et à la première tension négative -U1 par une résistance R76.

Un condensateur C7 est connecté entre la masse et la première tension négative -U1. Les transistors T37 et T40 et T41 sont équivalents à des diodes, leurs bases étant réunies à leurs collecteurs.

Le circuit de sortie 9 fonctionne à des vitesses de plusieurs centaines de Mbit/s, 600 Mbit/s par exemple, et délivre des signaux de niveau logique compatible avec les circuits logiques de type ECL ; il est blocable par le signal délivré par le translateur de niveau 8 sur le fil 15. L'impératif de la vitesse élevée ne permet pas d'utiliser, dans le circuit de sortie, la compensation en température habituelle des étages de sortie ECL connus, c'est-à-dire deux diodes tête-bêche associés à une résistance. D'autre part le circuit de sortie devant consommer le moins possible, cet impératif de consommation est incompatible avec la structure ECL classique.

Dans le circuit de sortie de la figure 5, les transistors de sortie T35 et T38 ne sont pas commandés par l'intermédiaire d'une résistance collecteur de faible valeur, mais par un étage différentiel bas courant, transistors T30 et T31, chargé par des résistances collecteur R60, R61 de valeurs plus élevées, suivi d'un étage d'adaptation, transistors T33, T34.

De ce fait on introduit un décalage supplémentaire d'une tension base/émetteur et une suroscillation plus importante en sortie du fait de la structure Darlington. Pour pallier le décalage supplémentaire, un décalage d'une tension base/émetteur au dessus du niveau de la masse est obtenu à l'aide des transistors T41 et T42, qui compensent également en température les transistors T34, T38 et T33, T35, et d'une résistance R72 réalisant un décalage de tension de l'ordre de 800 mV en étant associée à la source de courant constituée par les transistors T32, T46 et T47. La résistance R72 et les transistors T41 et T42 associés aux résistances R81 et R71 constituent un circuit de compensation pour compenser le décalage supplémentaire mentionné ci-dessus, et compenser en température les transistors de sortie T35 et T38 et les transistors T33 et T34 de l'étage d'adaptation.

L'inconvénient de la suroscillation est résolu en ajoutant des diodes T40 et T37 (ces transistors sont montés en diodes) qui limitent le gain des transistors de sortie T38 et T35 tout en repoussant le pôle dominant loin du pôle des transistors T33, T36 ; de cette manière on obtient une structure qui est pratiquement du premier ordre. En fin, au lieu d'utiliser classiquement des résistances dans le circuit émetteur des transistors de sortie T35 et T38, le circuit de sortie de l'invention utilise des sources de courant, transistors T44, T46 et T36, T39, ce qui permet de diminuer le courant dans les transistors de sortie T35 et T38, et de pouvoir couper le courant desdites sources de courant, ce qui désactive le circuit de sortie, ledit courant étant coupé à l'aide du transistor T43 commandé par le translateur de niveau 8 par le fil 15.

## Revendications

1. Laser power supply and control device for a fibre optic link between a subscriber and a telecommunications exchange including:
- a first input (E) for receiving a signal (SRI) for controlling said current;
- a current generator (A) having a first control input connected to the first input (E);
- an output modulator (7) having a control input for modulating the current supplied by the current generator;
- a second input for receiving a first data signal (LBD) connected to the control input of the output modulator; and
- an output for supplying to a laser a modulated current (LACL) supplied by the output modulator, characterised in that it further comprises:
- a third input for receiving a second data signal (LDD);
- a fourth input for receiving a select signal (LBA);
- a selector circuit (B) connected to the second, third and fourth inputs of the power supply device and to the control input of the output modulator to select one of the two data signals and to apply it to the control input of the modulator; and
- a fifth input for receiving an activation/deactivation signal (ACT) connected to a second control input of the current generator in order to cut off the power supply current of the laser when the latter is in its inactive state.

2. Laser power supply and control device according to claim 1 characterised in that the current generator (A) comprises a level adjust circuit (5) receiving the activation signal (ACT) and a current control circuit (6) having an input connected to the level adjust circuit and an output connected to the output modulator (7), in that the current control circuit comprises cascaded first, second and third current mirrors (M1, M2, M3), an amplifier (20) having an input adapted to connected to the external means for varying the laser current which delivers a direct current, said amplifier being supplied by the first current mirror (M1), in that the first current mirror (M1) has an input connected to the second current mirror (M2) and to a bypass transistor (T) connected to an output of the level adjust circuit (5) and which is adapted to be turned on in the absence of the activation signal (ACT), the first current mirror (M1) delivering a low direct current applied to the second current mirror when the bypass transistor is turned off, and the third current mirror (M3) has an output connected to the output modulator (7) to which it delivers a direct current laser current (I) proportional to said low direct current.

3. Laser power supply and control device according to claim 2 characterised in that the third current mirror (M3) has another output connected to an external measuring resistor (RM) to which it delivers a measuring current equal to a fraction of the laser current (I) which is varied by said external means to obtain across the measuring resistor (RM) a voltage (SMI) whose value depends on the laser to which the output modulator (7) is connected.

4. Laser power supply and control device according to claim 2 characterised in that the input of the amplifier (20) further receives an alternating current signal (BF) which modulates the direct current delivered by the external means for varying the current, said alternating current signal being sent by the laser to activate a subscriber equipment before sending data.

5. Laser power supply and control device according to claim 1 characterised in that the selector circuit comprises a first flip-flop (1) connected to a first data source, a second flip-flop (2) connected to a second data source, a differential multiplexer (3) connected to the output of each flip-flop and a control interface (4) receiving the select signal (LBA) and connected to an enabling input (EN) of each flip-flop and to a control input of the multiplexer (3), the output of which is connected to the output modulator (7).

6. Laser power supply and control device according to claim 5 characterised in that the control interface (4) includes a fourth current mirror (M31) connected to a first negative voltage (-U1), fifth and sixth current mirrors (M32, M33) each connected to a positive potential (+V), a differential circuit (T2, T3) controlled via a control transistor (T7) by the select signal (LBA) and connected to an input of each of the fifth and sixth current mirrors, in that each of the fifth and sixth current mirrors (M32, M33) has a first output connected to the enabling input of a flip-flop (1; 2) by an enabling transistor (T7; T9) and also to the positive potential (+V) through a limiter circuit (T11, T10; T12, T10) adapted to limit the amplitude of an enabling signal delivered by the enabling transistors (T7; T9), and in that each of the fifth and sixth current mirrors (M32, M33) is connected direct to the control input of the multiplexer (3) and also to a second negative voltage (-U2) through a bias circuit (T4, T5; T6, T5).

7. Laser supply and control device according to claim 1 characterised in that the output modulator (7) includes a differential output stage (T18; T19) connected to the current generator (A) and to earth and to the laser, in that said differential stage has two control inputs each connected by a respective resistor (R46; R47) to a respective transistor (T16; T17) connected to the output of the selector circuit (B) which delivers data to be transmitted, and in that each transistor (T16; T17) is in series with a constant current source, each current source being itself connected to a second negative voltage (-U2) and including a respective transistor (T22; T23) in series with a respective resistor (R52; R53) and fixed biased by a bias circuit (T20, T21, R50, R51).

8. Laser power supply and control device according to claim 1 characterised in that it further comprises a transmit data copy circuit (C) including a level adjust circuit (8) adapted to receive another activation signal (BUFACT) and an output circuit having an input connected to the selector circuit (B) delivering the data to be transmitted and to the level adjust circuit, said output circuit (9) copying said transmit data, in that the output circuit (9) includes a first differential stage (T30, T31) having an input connected to the selector circuit (B) and an adapter stage (T33, T34) connecting the first differential stage to first and second output transistors (T35, T38), in that the first differential stage (T30, T31) is connected to a positive potential (+V) by a compensator circuit (T41, T42, R72) for compensating a voltage offset introduced by the adapter stage (T33, T34) and providing compensation for said adapter stage and the first and second output transistors (T35, T38) and also to a first negative voltage (-U1) through a first constant current source (T32, R62) including a transistor fixed biased by a first bias circuit (T46, T47, R76, R77), in that the first and second output transistors (T35, T38) are connected to the first negative voltage (-U1) through respective second and third constant current sources (T36, R66; T39, R69), each of the second and third current sources including a transistor (T36; T39) fixed biased by a second bias circuit (T44, T45, R74, R75), and in that the first and second bias circuits (T46, T47; T44, T45) are connected by an activation transistor (T43) to an output of the level adjust circuit (8) which delivers a signal to activate the output circuit, said first and second bias circuits being disabled in the absence of the signal delivered by the level adjust circuit and disabling the first, second and third constant current sources (T32, T36, T39).

## Claims

1. Dispositif d'alimentation et de commande de laser pour liaison par fibre optique entre un abonné et un central de télécommunication; comportant :
- une première borne d'entrée (E) pour recevoir un signal (SRI) de réglage dudit courant;
- un générateur de courant (A) ayant une première entrée de commande reliée à la première borne d'entrée (E);
- un modulateur (7) de sortie, ayant une entrée de commande pour moduler le courant fourni par le générateur de courant;
- une deuxième borne d'entrée pour recevoir un premier signal de données (LBD), couplée à l'entrée de commande du modulateur de sortie;
- une borne de sortie pour fournir à un laser un courant module (LACL) fourni par le modulateur de sortie;
caractérisé en ce qu'il comporte en outre :
- une troisième borne d'entrée pour recevoir un second signal de données (LDD);
- une quatrième borne d'entrée pour recevoir un signal de sélection (LBA);
- un circuit de selection (B) couplé à la deuxième, troisième, et quatrième borne d'entrée du dispositif d'alimentation, et à l'entrée de commande du modulateur de sortie, pour sélectionner l'un des deux signaux de données et l'appliquer à l'entrée de commande du modulateur;
- une cinquième borne d'entrée pour recevoir un signal d'activation/désactivation (ACT), couplée à une seconde entrée de commande du générateur de courant, pour couper le courant d'alimentation du laser dans son état non actif.

2. Dispositif d'alimentation et de commande de laser selon la revendication 1, caractérisé par le fait que le générateur de courant (A) comprend un translateur de niveau (5) recevant le signal d'activation (ACT) et un circuit de réglage du courant (6) relié en entrée au translateur et en sortie au modulateur de sortie (7), que le circuit de réglage du courant a un premier (M1), un deuxième (M2) et un troisième (M3) miroirs de courant en cascade, un amplificateur (20) relié en entrée au moyen extérieur de réglage du courant laser qui délivre un courant continu, ledit amplificateur étant alimenté par le premier miroir de courant (M1), que le premier miroir de courant (M1) est relié en entrée du deuxième miroir de courant (M2) et à un transistor de dérivation (T) relié en sortie du translateur de niveau (5) et passant en l'absence du signal d'activation (ACT), le premier miroir de courant (M1) délivrant un faible courant continu appliqué au deuxième miroir de courant lorsque le transistor de dérivation est bloqué, et que le troisième miroir de courant (M3) a une sortie reliée au modulateur de sortie (7) auquel il délivre un courant continu laser (I) proportionnel audit faible courant continu.

3. Dispositif d'alimentation et de commande de laser selon la revendication 2, caractérisé par le fait que le troisième miroir de commande (M3) a une autre sortie reliée a une résistance de mesure (RM), extérieure, à laquelle il délivre un courant de mesure égal à une fraction du courant laser (I), le courant laser (I) étant réglé par ledit moyen extérieur pour obtenir aux bornes de la résistance de mesure (RM) une tension (SMI) dont la valeur est fonction du laser auquel le modulateur de sortie (7) est relié.

4. Dispositif d'alimentation et de commande de laser selon la revendication 2, caractérisé par le fait que l'entrée de l'amplificateur (20) reçoit également un signal alternatif (BF) qui module le courant continu délivré par le moyen extérieur de réglage du courant, ledit signal alternatif étant émis par le laser pour activer un abonné avant d'émettre des données.

5. Dispositif d'alimentation et de commande de laser selon la revendication 1, caractérisé par le fait que le circuit de sélection (B) comporte une première bascule (1) reliée à une première source de données, une deuxième bascule (2) reliée à une deuxième source de données, un multiplexeur (3), de type différentiel, relié en sortie de chaque bascule et une interface de commande (4) recevant le signal de sélection (LBA) et reliée à une entrée d'activation (EN) de chaque bascule et à une entrée de commande du multiplexeur (3) lui même relié en sortie au modulateur de sortie (7).

6. Dispositif d'alimentation et de commande de laser selon la revendication 5, caractérisé par le fait que l'interface de commande (4) a un quatrième miroir de courant (M31) relié à une première tension négative (-U1), un cinquième (M32) et un sixième (M33) miroirs de courant reliés chacun à un potentiel positif (+V), un circuit différentiel (T2, T3) commandé par l'intermédiaire d'un transistor de commande (T7) par le signal de sélection (LBA) et relié à une entrée de chacun des cinquième et sixième miroirs de courant, que chacun des cinquième (M32) et sixième (M33) miroirs de courant a une première sortie reliée d'une part à l'entrée de validation d'une bascule (1 ; 2) par l'intermédiaire d'un transistor de validation (T7 ; T9) et d'autre part au potentiel positif (+V) par un circuit de limitation (T11, T10 ; T12, T10) pour limiter en amplitude un signal de validation délivré par les transistors de validation (T7 ; T9) et que chacun des cinquième (M32) et sixième (M33) miroirs de courant est relié d'une part directement à l'entrée de commande du multiplexeur (3) et d'autre part à une deuxième tension négative (-U2) par un circuit de polarisation (T4, T5 ; T6, T5).

7. Dispositif d'alimentation et de commande de laser selon la revendication 1, caractérisé par le fait que le modulateur de sortie (7) a un étage différentiel de sortie (T18, T19) relié d'une part au générateur de courant (A) et d'autre part à la masse et au laser, que ledit étage différentiel a deux entrées de commande reliées chacune par une résistance (R46 ; R47) à un transistor (T16 ; T17) relié en sortie du circuit de sélection (B) qui délivre des données à émettre, et que chaque transistor (T16 ; T17) est en série avec une source de courant constant, chaque source de courant étant elle même reliée à une deuxième tension négative (-U2), et ayant un transistor (T22 ; T23) en série avec une résistance (R52 ; R53) et polarisé de manière fixe par un circuit de polarisation (T20, T21, R50, R51).

8. Dispositif d'alimentation de commande de laser selon la revendication 1, caractérisé par le fait qu'il comprend également un circuit de recopie des données à émettre (C) comprenant un translateur de niveau (8) recevant un autre signal d'activation (BUFACT) et un circuit de sortie relié en entrée au circuit de sélection (B) délivrant les données à émettre et au translateur de niveau, ledit circuit de sortie (9) recopiant lesdites données à émettre, que le circuit de sortie (9) a un premier étage différentiel (T30, T31) relié en entrée au circuit de sélection (B) et un étage d'adaptation (T33, T34) reliant le premier étage différentiel à un premier (T35) et à un deuxième (T38) transistors de sortie, que le premier étage différentiel (T30, T31) est relié d'une part à un potentiel positif (+V) par un circuit de compensation (T41, T42, R72) pour compenser un décalage de tension introduit par l'étage d'adaptation (T33, T34) et compenser en température ledit étage d'adaptation et les premier (T35) et deuxième (T38) transistors de sortie, et d'autre part à une première tension négative (-U1) par une première source de courant constant (T32, R62) ayant un transistor polarisé de manière fixe par un premier circuit de polarisation (T46, T47, R76, R77), que les premier (T35) et deuxième (T38) transistors de sortie sont reliés à la première tension négative (-U1) par une deuxième (T36, R66) et une troisième (T39, R69) sources de courant constant, respectivement, chaque deuxième et troisième sources de courant ayant un transistor (T36 ; T39) polarisé de manière fixe par un deuxième circuit de polarisation (T44, T45, R74, R75), et que les premier (T46, T47) et deuxième (T44, T45) circuits de polarisation sont reliés par un transistor d'activation (T43) en sortie du translateur de niveau (8) qui délivre un signal pour activer le circuit de sortie, lesdits premier et deuxième circuits de polarisation étant bloqués en l'absence de signal délivré par le translateur et bloquant à leur tour les première (T32), deuxième (T36) et troisième (T39) sources de courant constant.

## Patentansprüche

1. Speise- und Steuereinrichtung für einen Laser in einer Lichtleitfaserverbindung zwischen einem Teilnehmer und einer Vermittlungszentrale,
- mit einer ersten Eingangsklemme (E) zum Empfangen eines Signals (SRI) zur Steuerung des Stromes,
- mit einem Stromgenerator (A), dessen erster Steuereingang mit der ersten Eingangsklemme (E) verbunden ist,
- mit einem Ausgangsmodulator (7, dessen Steuereingang den vom Stromgenerator gelieferten Strom moduliert,
- mit einer zweiten Eingangsklemme zum Empfangen eines ersten Datensignals (LBD), die an den Steuereingang des Ausgangsmodulators angeschlossen ist,
- mit einer Ausgangsklemme, die einen vom Ausgangsmodulator gelieferten modulierten Strom (LACL) an einen Laser liefert,
dadurch gekennzeichnet, daß die Einrichtung weiter aufweist:
- eine dritte Eingangsklemme zum Empfangen eines zweiten Datensignals (LDD),
- eine vierte Eingangsklemme zum Empfangen eines Wählsignals (LBA),
- eine Wählschaltung (B), die an die zweite, dritte und vierte Eingangsklemme der Speiseeinrichtung und an den Steuereingang des Ausgangsmodulators angeschlossen ist, um eines der beiden Datensignale zu wählen und es an den Steuereingang des Modulators anzulegen,
- eine fünfte Eingangsklemme zum Empfangen eines Aktivierungs-/Entaktivierungssignals (ACT), die an einen zweiten Steuereingang des Stromgenerators angeschlossen ist, um den Speisestrom des Lasers in seinem nicht aktiven Zustand zu unterbrechen.

2. Speise- und Steuereinrichtung für einen Laser nach Anspruch 1, dadurch gekennzeichnet, daß der Stromgenerator (A) einen Pegelübertrager (5), der das Aktivierungssignal (ACT) empfängt, und eine Schaltung (6) zur Regelung des Stromes aufweist, die eingangsseitig an den Pegelübertrager und ausgangsseitig an den Ausgangsmodulator (7) angeschlossen ist, daß die Stromregelschaltung einen ersten (M1), einen zweiten (M2) und einen dritten Stromspiegel (M3) in Kaskadenschaltung und einen Verstärker (20) aufweist, der eingangsseitig an das äußere Mittel zur Regelung des Laserstroms angeschlossen ist, das einen Gleichstrom liefert, wobei der Verstärker durch den ersten Stromspiegel (M1) gespeist wird, daß der erste Stromspiegel (M1) an den Eingang des zweiten Stromspiegels (M2) und an einen Ableitungstransistor (T) angeschlossen ist, der an den Ausgang des Pegelübertragers (5) angeschlossen ist und bei Abwesenheit des Aktivierungssignals (ACT) leitend ist, wobei der erste Stromspiegel (M1) einen schwachen Gleichstrom liefert, der an den zweiten Stromspiegel geliefert wird, wenn der Ableitungstransistor gesperrt ist, und daß der dritte Stromspiegel (M3) mit einem Ausgang an den Ausgangsmodulator (7) angeschlossen ist, dem er einen Lasergleichstrom (I) liefert, der dem schwachen Gleichstrom proportional ist.

3. Speise- und Steuereinrichtung für einen Laser nach Anspruch 2, dadurch gekennzeichnet, daß der dritte Steuerspiegel (M3) mit einem weiteren Ausgang an einen äußeren Meßwiderstand (RM) angeschlossen ist, an den er einen Meßstrom liefert, der einem Bruchteil des Laserstroms (I) entspricht, wobei der Laserstrom (I) durch das äußere Mittel geregelt wird, um an den Klemmen des Meßwiderstands (RM) eine Spannung (SMI) zu erhalten, deren Wert vom Laser abhängt, mit dem der Ausgangsmodulator (7) verbunden ist.

4. Speise- und Steuereinrichtung für einen Laser nach Anspruch 2, dadurch gekennzeichnet, daß der Eingang des Verstärkers (20) auch ein Wechselsignal (BF) empfängt, das den vom äußeren Mittel zur Regelung des Stromes gelieferten Gleichstrom moduliert, wobei das Wechselsignal vom Laser ausgesendet wird, um einen Teilnehmer vor dem Senden von Daten zu aktivieren.

5. Speise- und Steuereinrichtung für einen Laser nach Anspruch 1, dadurch gekennzeichnet, daß die Wählschaltung (B) ein erstes Flip-Flop (1), das an eine erste Datenquelle angeschlossen ist, ein zweites Flip-Flop (2), die an eine zweite Datenquelle angeschlossen ist, einen Differentialmultiplexer (3), der an den Ausgang jedes Flip-Flops und an eine Steuerschnittstelle (4) angeschlossen ist, die das Wählsignal (LBA) empfängt und an einen Aktivierungseingang (EN) jedes Flip-Flops sowie an einen Steuereingang des Multiplexers (3) angeschlossen ist, der selber ausgangsseitig mit dem Ausgangsmodulator (7) verbunden ist.

6. Speise- und Steuereinrichtung für einen Laser nach Anspruch 5, dadurch gekennzeichnet, daß die Steuerschnittstelle (4) eine vierten Stromspiegel (M31), der an eine erste negative Spannung (-U1) angeschlossen ist, einen fünften (M32) und einen sechsten Stromspiegel (M33), die beide an ein positives Potential (+V) angeschlossen sind, und eine Differentialschaltung (T2, T3) aufweist, die über einen Steuertransistor (T7) vom Wählsignal gesteuert wird und an je einen Eingang des fünften und des sechsten Stromspiegels angeschlossen ist, daß der fünfte (M32) und der sechste Stromspiegel (M33) je einen ersten Ausgang aufweisen, der einerseits an den Freigabeeingang eines Flip-Flops (1; 2) über einen Freigabetransistor (T7; T9), und andererseits an das positive Potential (+V) durch eine Begrenzerschaltung (T11, T10; T12, T10) angeschlossen ist, um die Amplitude eines von den Freigabetransistoren (T7; T9) gelieferten Freigabesignals zu begrenzen, und daß der fünfte (M32) und der sechste Stromspiegel (M33) einerseits direkt an den Steuereingang des Multiplexers (3) und andererseits über je eine Vorspannschaltung (T4, T5; T6, T5) an eine zweite negative Spannung (-U2) angeschlossen sind.

7. Speise- und Steuereinrichtung für einen Laser nach Anspruch 1, dadurch gekennzeichnet, daß der Ausgangsmodulator (7) eine Ausgangsdifferentialstufe (T18, T19) aufweist, die einerseits an den Stromgenerator (A) und andererseits an Masse und an den Laser angeschlossen ist, daß die Differentialstufe zwei Steuereingänge aufweist, die je über einen Widerstand (R46; R47) an einen Transistor (T16; T17) angeschlossen sind, der an den Ausgang der Wählschaltung (B) angeschlossen ist, die auszusendende Daten liefert, und daß jeder Transistor (T16; T17) in Reihe mit einer Konstantstromquelle geschaltet ist, wobei jede Stromquelle ihrerseits mit einer zweiten negativen Spannung (-U2) verbunden ist und einen Transistor (T22; T23) aufweist, der in Reihe mit einem Widerstand (R52; R53) geschaltet ist und über eine Vorspannschaltung (T20, T21, R50, R51) fest vorgespannt wird.

8. Speise- und Steuereinrichtung für einen Laser nach Anspruch 1, dadurch gekennzeichnet, daß sie weiter eine Schaltung (C) zum Kopieren der auszusendenden Daten aufweist, die einen Pegelübertrager (8), der ein weiteres Aktivierungssignal (BU-FACT) empfängt, sowie eine Ausgangsschaltung enthält, die eingangsseitig an die Wählschaltung (B), die die zu sendenden Daten liefert, und an den Pegelübertrager angeschlossen ist, wobei die Ausgangsschaltung (9) die zu sendenden Daten kopiert, daß die Ausgangsschaltung (9) eine erste Differentialstufe (T30, T31), die eingangsseitig an die Wählschaltung (B) angeschlossen ist, und eine Anpassungstufe (T33, T34) aufweist, die die erste Differentialstufe an einen ersten (T35) und an einen zweiten Ausgangstransistor (T38) anschließt, daß die erste Differentialstufe (T30, T31) einerseits über eine Kompensationsschaltung (T41, T42, R72) an ein positives Potential (+V) angeschlossen ist, um eine durch die Anpassungstufe (T33, T34) eingeführte Spannungsverschiebung zu kompensieren und um die Anpassungsstufe und den ersten (T35) und den zweiten Ausgangstransistor (T38) temperaturmäßig zu kompensieren, und andererseits über eine erste Konstantstromquelle (T32, R32) an eine erste negative Spannung (-U1) angeschlossen ist, die einen durch eine erste Vorspannschaltung (T46, T47, R76, R77) fest vorgespannten Transistor aufweist, daß der erste (T35) und der zweite Ausgangstransistor (T38) durch eine zweite (T36, R66) bzw. eine dritte Konstantstromquelle (T39, R69) an eine erste negative Spannung (-U1) angeschlossen sind, wobei die zweite und die dritte Stromquelle je einen Transistor (T36; T39) aufweisen, der durch eine zweite Vorspannschaltung (T44, T45, R74, R75) fest vorgespannt ist, und daß die erste (T46, T47) und die zweite Vorspannschaltung (T44, T45) über einen Aktivierungstransistor (T43) an den Ausgang des Pegelübertragers (8) angeschlossen sind, der ein Signal zur Aktivierung der Ausgangsschaltung liefert, wobei die erste und die zweite Vorspannschaltung bei Fehlen des vom Übertrager gelieferten Signals gesperrt sind und ihrerseits die erste (T32), die zweite (T36) und die dritte Konstantstromquelle (T39) sperren.
